# FASCICULE DE BREVET EUROPEEN

(11) **EP 2 328 316 B1**
(45) Date de publication et mention de la délivrance du brevet: **11.09.2013**
(21) Numéro de dépôt: 10191981.9
(22) Date de dépôt: 19.11.2010
(51) Int. Cl.: H04N 21/418, H04N 21/266, H04L 29/06, H04N 7/167

(54) **Controle d'accès à un contenu numérique**
Zugriffskontrolle auf einen digitalen Inhalt
Access control to digital content

(30) Priorité: 20.11.2009 FR 0958243
(43) Date de publication de la demande: 01.06.2011
(73) Titulaire: France Télécom, 75015 Paris (FR)
(72) Inventeur: Guionnet, Chantal, 35510, CESSON-SEVIGNE (FR); Fevrier, Pierre, 35250, ST SULPICE LA FORET (FR)
(74) Mandataire: Cabinet Plasseraud

(56) Documents cités:
- EP-A1- 1 947 853
- EP-A1- 1 968 316
- EP-A1- 1 995 933
- EP-A2- 0 899 956
- US-A1- 2009 190 757

## Description

L'invention se rapporte au domaine de la transmission de contenus multimédia dans des réseaux de transmission, et plus particulièrement au contrôle d'accès à ces contenus multimédia.

Dans ce type de réseaux de transmission, des contenus multimédia sont transmis de manière chiffrée, et ne peuvent être restitués au niveau d'un récepteur que dans certaines conditions. Les réseaux de transmission de contenus multimédia peuvent être utilisés notamment pour des applications de télévision à péage. Afin de contrôler l'accès au contenu numérique, il est prévu de le diffuser sous une forme chiffrée. Pour y accéder, un récepteur de ce contenu numérique chiffré doit récupérer la clé de chiffrement (ou CW pour 'Control Word') ou les clés de chiffrement qui y sont associées afin de pouvoir déchiffrer le contenu numérique reçu.

On connait de tels systèmes de contrôle d'accès dans lesquels des messages de contrôle d'accès sont diffusés de manière répétée et de manière synchronisée avec le contenu numérique. Ces messages de contrôle sont de type ECM (pour 'Entitlement Control Message') et indiquent, sous une forme chiffrée, la ou les clés de chiffrement à utiliser pour déchiffrer le contenu numérique. Ce type de message de contrôle d'accès indique à la fois la clé de chiffrement sous forme chiffrée et également des critères d'accès qui sont associés au contenu numérique. D'un autre côté, des droits d'accès sont respectivement attachés aux récepteurs. Ces droits d'accès peuvent être reçus par des messages individualisés de type EMM (pour 'Entitlement Management Message'). Ce type de message est un message personnalisé ou non qui peut être émis à destination d'un seul abonné ou encore à destination d'un groupe d'abonnés.

Dans ce contexte, sur réception d'un message de contrôle d'accès ECM, le récepteur contrôle si ses droits d'accès remplissent les critères d'accès associés au contenu numérique. Si tel est le cas, la clé de chiffrement transportée sous une forme chiffrée dans le message de contrôle d'accès peut alors être déchiffrée et utilisée pour accéder au contenu numérique.

Le déchiffrement de la clé de chiffrement peut être réalisé si le récepteur dispose au préalable d'une clé d'exploitation. Cette clé d'exploitation est en général comprise dans les droits que le récepteur a reçus via un message de type EMM. Par conséquent, si les droits du récepteur sont compatibles avec les critères d'accès de l'ECM, et si le récepteur possède la clé d'exploitation associée à l'ECM, le récepteur est autorisé à déchiffrer la clé de chiffrement reçue en association au contenu numérique, et alors il est en mesure de déchiffrer ce contenu numérique.

Dans ces conditions, le contrôle d'accès est effectué sur la base de droits d'accès attribués à chaque récepteur. Ainsi, seul un utilisateur disposant de droits d'accès correspondant aux critères d'accès peut alors déchiffrer la ou les clés de chiffrement requises et accéder au contenu numérique diffusé.

US 2009/190757 A1 concerne notamment des systèmes et méthodes de diffusion de messages de gestion de droits (EMM) utilisant une fenêtre de d'envoi planifié. D1 divulgue la réception d'une fenêtre de diffusion de messages EMM depuis un système de distribution, l'écoute des messages EMM durant la fenêtre de diffusion de messages EMM, et la réception des messages EMM de la part du système de distribution durant la fenêtre de diffusion de messages EMM.

EP 1 995 933 A1 se rapporte à des systèmes et méthodes de gestion de distribution de contenus tels que des programmes télévisés incluant un système de gestion de diffusion agencé pour gérer l'envoi de contenu, un système de gestion de comptes agencé pour gérer les requêtes d'utilisation de contenu et les communications de/vers des terminaux utilisateurs, ainsi qu'un système de traitement couplé au système de gestion de comptes et agencé pour analyser les requêtes en relation avec les informations disponibles au sujet des utilisateurs afin de déterminer si les ressources requises pour la fourniture de contenu aux terminaux peuvent être compensées compte tenu d'une quantité de ressources d'utilisation pré-allouée.

EP 1 947 853 A1 concerne notamment un serveur de contenus agencé pour ajouter un identifiant de clé de chiffrement lors du chiffrement d'un contenu avec ladite clé, et pour transmettre le contenu concaténé avec ledit identifiant à un dispositif de restitution de contenus, en même temps qu'il transmet la clé de chiffrement à un serveur fournisseur de messages commerciaux. Le serveur fournisseur de messages commerciaux incorpore la clé de chiffrement dans les données de messages commerciaux et envoie les données de messages commerciaux dans lesquelles est incorporée la clé de chiffrement correspondant à l'identifiant reçu de la part du dispositif de restitution de contenus au dispositif de restitution de contenus. Le dispositif de restitution de contenus transmet l'identifiant de la clé de chiffrement au serveur fournisseur de messages commerciaux et reproduit les données de messages commerciaux reçues de la part du serveur fournisseur de messages commerciaux pour déchiffrer le contenu en utilisant la clé de chiffrement incorporée dans les données de messages commerciaux.

EP 1 968 316 A1 vise notamment à empêcher la perte de revenus liée aux enregistreurs numériques agencés pour ne pas enregistrer les messages publicitaires. La solution s'appuie sur un procédé de contrôle d'accès conditionnel à des contenus audio/vidéo comprenant au moins une section publicitaire. Le procédé définit une information de contrôle associée au contenu audio/vidéo et stockée dans un module de sécurité, et met à jour l'information de contrôle dans le module de sécurité à l'aide d'informations de condition inclues dans un message de contrôle se rapportant à la section publicitaire. Le procédé comprend la réception par le module de sécurité d'un message de contrôle se rapportant à la section principale de contenu du contenu audio/vidéo et contenant une information de condition liée à l'information de contrôle stockée. Le procédé comprend la vérification que l'information de condition correspond à l'information de contrôle, et si c'est bien le cas, l'envoi à l'enregistreur numérique d'un signal d'autorisation permettant l'accès à la section principale de contenu du contenu audio/vidéo.

La présente invention vise à améliorer la situation.

Un premier aspect de la présente invention propose un procédé de gestion d'accès d'un récepteur à un contenu numérique transmis dans un réseau de communication sous une forme chiffrée ;
ledit procédé de gestion d'accès comprenant les étapes suivantes au niveau du récepteur :
/a/ recevoir un message de contrôle d'accès ;
/b/ obtenir un message de contrôle d'accès complété en ajoutant une information complémentaire audit message de contrôle d'accès ;
/c/ obtenir une clé de déchiffrement du contenu numérique sur la base du message de contrôle d'accès complété ; et
/d/ déchiffrer le contenu numérique transmis à l'aide de la clé de déchiffrement obtenue ;
dans lequel ladite information complémentaire est fournie par un utilisateur.

On entend par le terme 'récepteur' tout type de récepteur de contenu numérique transmis dans un réseau de communication sans qu'aucune limitation ne soit attachée ni au type de réseau de communication ni même au protocole de transmission utilisé pour cette transmission. Un contenu numérique peut correspondre à tout type de données transmises, comme par exemple des données vidéo, audio, des images, du son, tout type de documents, etc ...

Aucune limitation quant à la transmission du contenu numérique, sous la forme d'un flux de données, n'est attachée à la présente invention non plus. On peut par exemple envisager une diffusion générale du contenu numérique.

On entend par les termes 'message de contrôle d'accès' tout type de message émis qui permet d'effectuer un contrôle d'accès du récepteur à ce contenu numérique. Un tel message de contrôle d'accès peut être un message de type ECM ou encore un message de type EMM. Dans le cas où le message de contrôle est un message de type ECM, il contient lui-même la clé de déchiffrement, dans le cas où le message de contrôle est un message de type EMM, il contient des informations préalables (comme des droits d'accès ou encore des clés d'accès) au traitement d'un message ultérieur de type ECM. Ainsi, que ce soit de manière directe via un message ECM ou encore que ce soit de manière indirecte via un message EMM suivi d'un message de type ECM, suite à la réception de ce message de contrôle d'accès selon un mode de réalisation de la présente invention, le récepteur est en mesure d'obtenir la clé de déchiffrement du contenu numérique.

Le contenu numérique est transmis sous forme chiffrée et peut être déchiffré à l'aide d'une clé de déchiffrement qui peut correspondre à la clé de chiffrement du contenu numérique ou qui peut en être différente également. Cette clé de déchiffrement ne peut être obtenue que si l'utilisateur a fourni une information complémentaire pour compléter le message de contrôle d'accès reçu.

De manière générale, il est prévu ici de transmettre un message de contrôle d'accès auquel ne peut être appliqué un traitement pour obtenir la clé de déchiffrement, que ce soit de manière directe c'est-à-dire dans le cas où le message reçu contient lui-même la clé de déchiffrement, comme par exemple un message de type ECM, ou de manière indirecte c'est-à-dire dans le cas où le message reçu permet d'obtenir la clé de déchiffrement contenu dans un message reçu ultérieurement, comme par exemple un message de type EMM. Plus précisément, dans un mode de réalisation, le message de contrôle d'accès transmis est incomplet. Certaines données sont manquantes pour permettre son traitement.

En effet, dans un mode de réalisation, le récepteur attend un message de contrôle d'accès conforme à un certain format pour permettre un traitement correct. Notamment, dans le cas où ce message de contrôle d'accès reçu est un message de type ECM, le format attendu au niveau du récepteur comprend des critères d'accès, une clé de déchiffrement du contenu numérique, et une signature numérique de l'ensemble de ces données. Dans le cas où il s'agit d'un message de type EMM, le format attendu comprend des droits d'accès ou encore des clés d'accès, et une signature numérique. Le message de contrôle d'accès reçu étant incomplet, il convient de le compléter avec une information complémentaire pour en permettre son traitement en réception.

On entend par les termes 'information complémentaire' toute information qui permet de compléter le message de contrôle d'accès reçu afin d'obtenir la clé de déchiffrement en clair du contenu numérique diffusé.

Aucune limitation n'est attachée à la présente invention au regard du mécanisme mis en place pour que le récepteur et une entité de transmission en charge de transmettre le message de contrôle d'accès soient en quelque sorte synchronisées sur l'information complémentaire requise pour le message de contrôle d'accès transmis. On peut notamment prévoir que le message de contrôle d'accès indique lui-même le type d'information complémentaire que l'utilisateur doit fournir ou bien on peut également envisager que le récepteur connaisse au préalable le type d'information complémentaire qui est manquante dans le message de contrôle d'accès reçu. Ainsi, l'utilisateur peut être sollicité par un quelconque moyen pour qu'il fournisse cette information complémentaire. Aucune limitation n'est attachée à la présente invention au regard du mécanisme utilisé pour que l'utilisateur dispose d'une telle information complémentaire. On peut prévoir de lui faire deviner ou encore de lui transmettre via le réseau de communication par exemple, ou encore de lui afficher cette donnée lors de la diffusion d'un programme publicitaire.

On peut également prévoir que l'utilisateur fournisse une information complémentaire qui ne corresponde pas aux données nécessaires pour compléter le message de contrôle d'accès. Ainsi, l'information complémentaire peut notamment représenter moins de données que nécessaires pour compléter le message de contrôle d'accès reçu. Le récepteur peut alors être adapté pour compléter correctement le message de contrôle d'accès.

Dans un mode de réalisation, le message de contrôle d'accès complété complémentaire peut alors correspondre à au moins une partie de la clé de déchiffrement sous forme chiffrée. Ici, le message de contrôle d'accès reçu est incomplet dans le sens où il ne contient pas, ou tout au moins que partiellement, la clé de déchiffrement à utiliser pour déchiffrer le contenu numérique.

On peut également prévoir que le message de contrôle d'accès à compléter indique la clé de déchiffrement sous forme chiffrée et au moins un critère d'accès et l'information complémentaire peut alors correspondre à au moins un parmi une partie de la clé de déchiffrement sous forme chiffrée et une partie dudit critère d'accès. Ainsi, le message de contrôle d'accès à compléter peut être incomplet dans le sens où il n'indique pas au moins un des critères d'accès prévus initialement. Il ne pourra être correctement traité au niveau du récepteur que dans le cas où il est complété par le au moins un critère d'accès manquant. On peut également prévoir que les données manquantes dans le message de contrôle soient relatives à sa signature numérique. De manière plus générale, on peut prévoir de retirer du message de contrôle d'accès tout type de données qu'il contient selon un format connu du récepteur.

Le message de contrôle d'accès complété peut être un message préalable qui permet de traiter un message ultérieur indiquant la clé de déchiffrement. Tel est le cas lorsque le message de contrôle d'accès est un message de type EMM.

Le message de contrôle d'accès peut être un message individuel, comme par exemple un message de type EMM, ou un message de groupe, ou ou un message général, comme par exemple un message de type ECM. On peut en effet prévoir dans un système de contrôle d'accès existant de retirer une information au moins d'un message de type EMM, comme par exemple un droit d'accès ou une clé d'exploitation chiffrée puisque ce type de message permet de transmettre les droits d'accès d'un utilisateur.

En utilisant en tant que message de contrôle d'accès un message individuel de type EMM par exemple on est en mesure de personnaliser l'information complémentaire à fournir par l'utilisateur pour accéder au contenu numérique. Dans le contexte d'un jeu de télévision, il est ainsi également possible de limiter aisément le nombre de joueurs autorisés à participer à ce jeu en ne transmettant qu'à un nombre limité de récepteur les messages EMM qui fournissent les droits d'accès à ce jeu.

Dans un mode de réalisation de la présente invention, le message de contrôle d'accès indique une pluralité d'informations complémentaires et dans ce cas l'utilisateur peut en sélectionner une parmi la pluralité pour la fournir en tant qu'information complémentaire. Si l'utilisateur fait le bon choix, le récepteur obtient alors une clé de déchiffrement valide pour déchiffrer le contenu numérique. S'il fait le mauvais choix, le message de contrôle d'accès peut alors être éventuellement correctement traité, mais la clé de déchiffrement obtenue ne permet pas de déchiffrer le contenu numérique.

Dans un mode de réalisation de la présente invention, l'information complémentaire est reçue dans un autre contenu numérique. Par exemple, on peut prévoir de transmettre l'information complémentaire requise pour compléter le message de contrôle d'accès transmis dans un contenu numérique transmis en clair, comme au cours d'une séquence publicitaire. Ainsi, seul un utilisateur attentif au cours de cette séquence peut récupérer l'information complémentaire qui lui permet ensuite d'accéder à un contenu numérique suivant transmis ou diffusé sous une forme chiffrée.

Dans un autre mode de réalisation, les étapes suivantes peuvent en outre être mises en oeuvre au niveau du récepteur :
/1/ recevoir et restituer une question; et
/2/ recevoir d'un utilisateur une réponse à ladite question;
dans lequel ladite réponse correspond à l'information complémentaire.

Ces étapes peuvent être avantageusement mises en oeuvre dans le contexte d'un jeu de télévision notamment. En effet, il est alors possible de ne donner accès, au sens déchiffrer, à une question suivante que si la réponse à la question précédente est correcte. Or, si la réponse à la question précédente correspond à une information complémentaire au sens de la présente invention, elle peut aisément donner accès à un contenu numérique transmis sous forme chiffrée comme énoncé ci-avant.

On peut ainsi aisément ajouter un niveau de contrôle d'accès fondé sur une information complémentaire au message de contrôle d'accès reçu, à fournir au niveau du récepteur. Différents nouveaux services peuvent alors être mis en place facilement dans cet environnement.

Ces dispositions permettent avantageusement une grande flexibilité dans la mise en place d'un contrôle d'accès à un contenu numérique transmis dans un réseau, la mise en place d'un tel contrôle restant aisée notamment dans le contexte d'un système existant.

En effet, dans un mode de réalisation, il suffit de prévoir de retirer une information du message de contrôle d'accès à envoyer et de prévoir un mécanisme pour requérir cette information au niveau du récepteur. Mais, il est possible de conserver avantageusement des contrôles similaires à appliquer au message de contrôle d'accès ainsi complété.

On peut prévoir soit d'autoriser l'accès au contenu numérique sur la base de l'information complémentaire, soit encore d'autoriser l'accès au contenu numérique sur la base à la fois de l'information complémentaire et en outre de critères d'accès associés au contenu numérique.

Il peut être pertinent pour certaines applications, ou dans certains systèmes de contrôle d'accès, de contrôler l'accès à un contenu numérique à la fois sur la base d'une information complémentaire fournie par un utilisateur au niveau d'un récepteur et sur la base de critères d'accès requis au regard des droits d'accès dont dispose le récepteur considéré. Remplir ces critères d'accès peut correspondre par exemple à vérifier si un abonnement spécifique est présent et valide, ou encore à vérifier si un compte de l'utilisateur du récepteur est assez rempli pour pouvoir payer l'accès à un contenu dont le coût, ou débit à effectuer, constitue le critère d'accès.

Afin de n'autoriser l'accès que sur la base de l'information complémentaire, dans un système existant, il est aisé d'utiliser un message de type ECM en tant que message de contrôle d'accès selon un mode de réalisation et de prévoir que le nombre de critères d'accès indiqué dans ce message est 0. On peut également prévoir d'indiquer un nombre de critères non nul mais en précisant qu'il n'y a pas de contrôle à effectuer.

Un deuxième aspect de la présente invention propose un procédé de gestion d'accès d'un récepteur à un contenu numérique transmis dans un réseau de communication sous une forme chiffrée ;
ledit procédé de gestion d'accès comprenant les étapes suivantes au niveau d'une entité de transmission :
/a/ composer un message de contrôle d'accès, ledit message de contrôle d'accès comprenant des informations adaptées pour un traitement au niveau du récepteur,
/b/ obtenir un message de contrôle d'accès à compléter en retirant au moins une desdites informations dudit message de contrôle d'accès ; et
/c/ transmettre audit récepteur le message de contrôle d'accès à compléter, ledit message transmis étant à compléter par une information complémentaire fournie par un utilisateur.

Avantageusement, cette entité de transmission permet de transmettre un message de contrôle d'accès incomplet selon un mode de réalisation. Aucune limitation n'est attachée à la présente invention au regard du mécanisme permettant que le récepteur soit informé du type d'information manquante dans le message de contrôle d'accès reçu.

Un troisième aspect de la présente invention propose un récepteur adapté pour la mise en oeuvre d'un procédé de gestion d'accès selon le premier aspect de la présente invention.

Un quatrième aspect de la présente invention propose une entité de transmission adaptée pour la mise en oeuvre d'un procédé de contrôle d'accès selon le deuxième aspect de la présente invention.

Un cinquième aspect de la présente invention propose un système de contrôle d'accès à un contenu numérique, comprenant une entité de transmission selon le quatrième aspect de la présente invention, et au moins un récepteur selon le troisième aspect de la présente invention.

Un sixième aspect de la présente invention propose un programme d'ordinateur comportant des instructions pour la mise en oeuvre du procédé selon le premier aspect de la présente invention, lorsque ce programme est exécuté par un processeur.

Un septième aspect de la présente invention propose un programme d'ordinateur comportant des instructions pour la mise en oeuvre du procédé selon le deuxième aspect de la présente invention, lorsque ce programme est exécuté par un processeur.

D'autres particularités et avantages de la présente invention apparaîtront dans la description détaillée ci-après, faite en référence aux dessins annexés sur lesquels :
- la figure 1 illustre un système de contrôle d'accès selon un mode de réalisation de la présente invention ;
- la figure 2 les principales étapes d'un procédé de gestion d'accès selon un mode de réalisation de la présente invention ;
- la figure 3 illustre un système de contrôle d'accès selon un mode de réalisation de la présente invention ;
- la figure 4 illustre un autre système de contrôle d'accès selon un mode de réalisation de la présente invention ;
- la figure 5 illustre un récepteur et une entité de transmission selon un mode de réalisation de la présente invention.

Des références identiques désignent des objets identiques ou similaires d'une figure à l'autre.

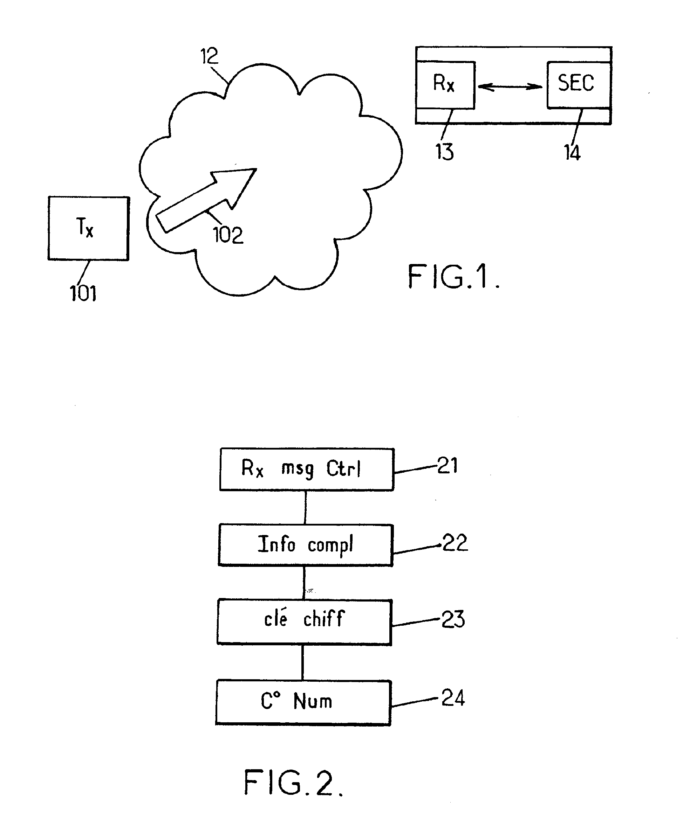

La figure 1 illustre un système de contrôle d'accès selon un mode de réalisation de la présente invention.

Ce système de contrôle d'accès comprend une entité de transmission 101 qui est adaptée pour transmettre un contenu numérique chiffré 102 dans un réseau de communication 12. Ce contenu numérique peut être tout contenu de type vidéo, audio ou visuel ou texte, ou de manière générale multimédia.

Ce contenu numérique chiffré 102 transmis dans le réseau peut par exemple être diffusé ou multi diffusé dans le réseau vers un ou plusieurs récepteurs 13. Chaque récepteur 13 est adapté pour restituer le contenu numérique en clair dans le cas où le contrôle d'accès lui autorise l'accès à ce contenu.

Le récepteur 13 peut contenir un module de sécurité 14 qui est plus particulièrement en charge le traitement effectif du message de contrôle d'accès et d'obtenir la clé de déchiffrement sous forme claire dans le cas où l'accès au contenu numérique est autorisé.

La figure 2 illustre les principales étapes d'un procédé de gestion d'accès selon un mode de réalisation de la présente invention.

A une étape 21, un message de contrôle d'accès est reçu au niveau du récepteur. Ce message de contrôle d'accès peut être associé de manière directe ou indirecte au contenu numérique transmis. En effet, lorsqu'il est de type ECM il est associé directement au contenu numérique dans le sens où il contient la clé de déchiffrement de ce contenu et dans le cas où il est de type EMM il y est associé de manière indirecte dans le sens où la clé de déchiffrement correspondante peut être récupérée dans un message ultérieur de type ECM sur la base d'informations reçues préalablement dans le message de type EMM.

Puis, à une étape 22, il est prévu d'obtenir une information complémentaire destinée à compléter le message de contrôle d'accès reçu.

Ensuite, à une étape 23, on obtient la clé de déchiffrement du contenu sur la base du message de contrôle d'accès complété avec l'information complémentaire. Puis, à une étape 24, le contenu numérique est déchiffré à l'aide de la clé obtenue à l'étape 23 et peut ainsi être restitué pour un utilisateur du récepteur.

Ces étapes principales permettent de baser le contrôle d'accès à un contenu numérique sur une information complémentaire fournie par l'utilisateur au niveau du récepteur.

Il est aisé de mettre en oeuvre ces étapes au sein d'un système de contrôle d'accès existant qui se fonde déjà sur des critères d'accès et des droits d'accès pour décider d'autoriser ou non un récepteur à restituer un contenu numérique en clair pour un utilisateur.

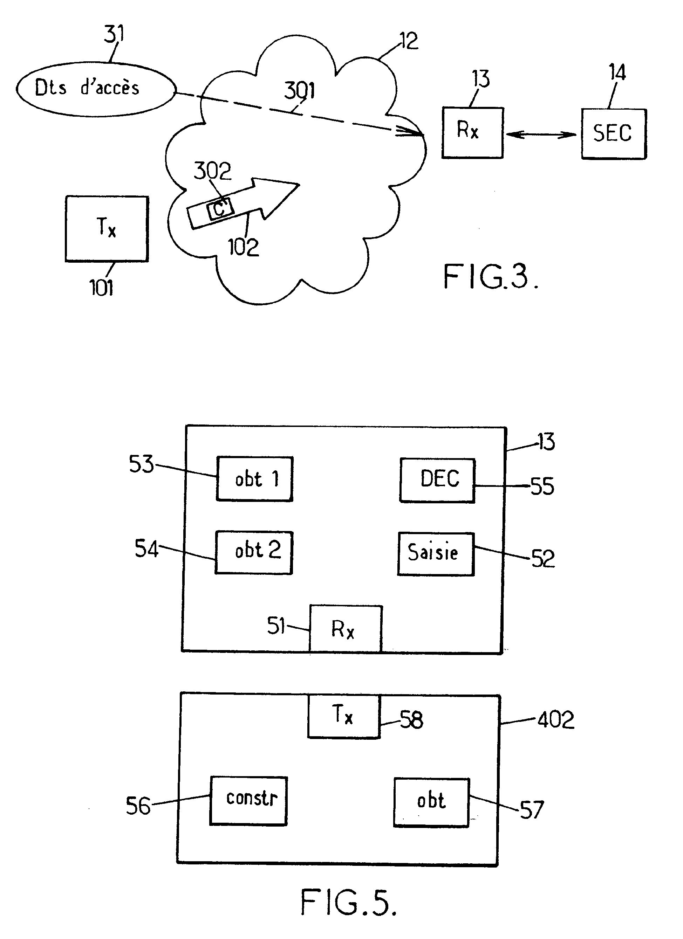

La figure 3 illustre une telle mise en oeuvre dans un système de contrôle d'accès basé à la fois sur des critères d'accès transportés dans des messages de contrôle et une information complémentaire selon un mode de réalisation de la présente invention.

Le système illustré comprend une entité de transmission 101 de contenu numérique dans le réseau 12.

Aucune limitation n'est attachée au type de droits d'accès que l'on peut prendre en compte dans le système ni au mécanisme permettant à un récepteur ou utilisateur de récupérer ses droits d'accès. On peut notamment prévoir à cet effet une entité de gestion d'accès 31 qui transmet les droits au récepteur 13 via des messages 301. Ces messages 301 peuvent être des messages de type EMM. Puis, ces droits d'accès sont stockés dans le module de sécurité du récepteur. Lorsque le message de contrôle d'accès selon la présente invention correspond à un message de type EMM, l'émission de ce message de contrôle d'accès incomplet peut être faite par cette entité de gestion d'accès.

Ces droits d'accès peuvent correspondre à un abonnement d'un type donné pour une période donnée, une réservation de séance particulière, ou encore un nombre de jetons permettant ensuite un achat impulsif local, une clé d'exploitation d'ECM etc ...

Dans ce contexte, le contenu numérique peut être diffusé en association avec un message indiquant des critères d'accès 302 associés à ce contenu numérique 102. Ce type de message indiquant un critère d'accès 302 peut être un message ECM par exemple.

Ainsi, l'accès au contenu numérique est alors fonction des critères d'accès associés au contenu numérique et des droits d'accès attachés au récepteur.

En outre, ici, il est prévu que le récepteur 13 dispose d'une information complémentaire associée au contenu numérique fournie par l'utilisateur. Une fois, le message de contrôle d'accès complété avec cette information complémentaire, si les critères d'accès sont remplis par les droits d'accès alors il est décidé d'autoriser l'accès au contenu numérique. La clé de déchiffrement est alors obtenue en clair pour déchiffrer le contenu numérique protégé.

Ainsi, avantageusement, il est possible de contrôler l'accès à un contenu numérique à la fois sur la base de droits d'accès préalablement enregistrés par le récepteur et sur la base d'une information complémentaire qui peut être récupérée par n'importe quel moyen et notamment de manière dynamique.

Ici, le récepteur est autorisé à restituer le contenu numérique à un utilisateur seulement si il dispose à la fois des droits d'accès requis et d'une information complémentaire associée au contenu numérique et fournie par l'utilisateur.

Alternativement, dans un mode de réalisation de la présente invention, on prévoit de contrôler l'accès à un contenu numérique soit sur la base de droits d'accès stockés au niveau du récepteur, soit sur la base d'une valeur fournie par l'utilisateur du récepteur. Ainsi, au lieu d'associer ces deux types de contrôle d'accès, on peut les gérer de manière alternative. D'un côté, un récepteur qui dispose des droits d'accès requis pour obtenir un contenu numérique est alors autorisé à accéder à ce contenu numérique. D'un autre côté, un récepteur qui ne dispose pas de ces droits d'accès, peut également accéder au contenu numérique considéré s'il est en mesure d'obtenir l'information complémentaire requise pour compléter le message de contrôle d'accès reçu selon un mode de réalisation de la présente invention.

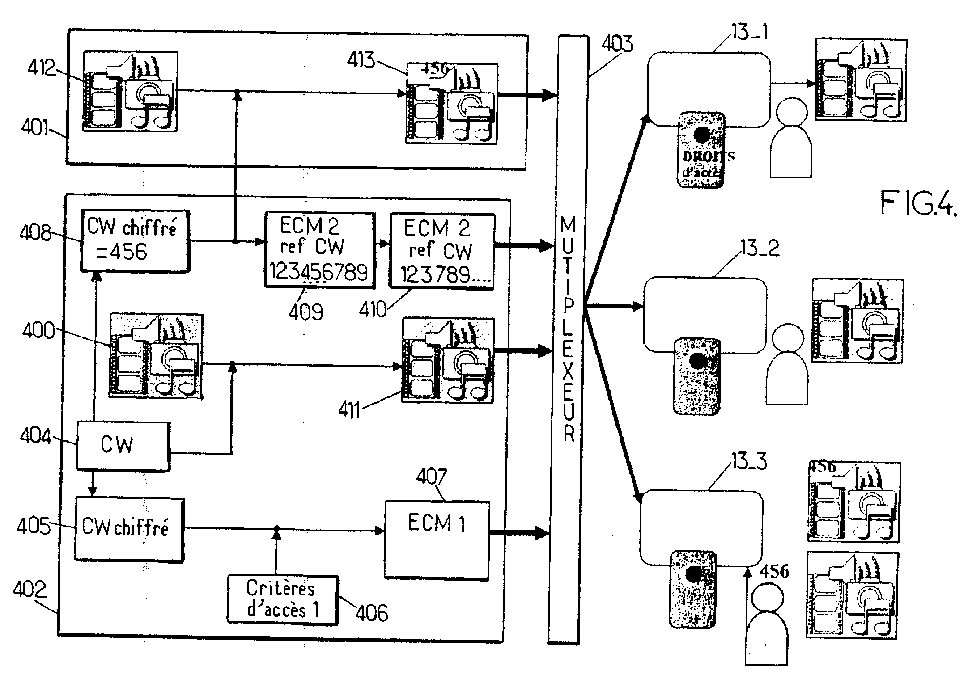

Ce mode de réalisation est illustré en figure 4 et décrit ci-après dans son application au service de diffusion de télévision. Le système illustré en figure 4 comprend deux entités de diffusion 401 et 402 diffusant respectivement des contenus numériques 412 et 400, ainsi que des récepteurs 13-1, 13-2 et 13-3.

Par la suite, à titre illustratif uniquement et non pas limitatif, la clé de déchiffrement correspond à la clé de déchiffrement et le message de contrôle d'accès reçu est un message de type ECM.

Le contenu numérique 400 est diffusé sous une forme chiffrée 411 à l'aide d'une clé de chiffrement CW 404. Cette clé de chiffrement CW est elle-même chiffrée pour être transmise de manière sécurisée via un ou plusieurs messages associés ECM au contenu numérique 411.

L'entité de diffusion 402 transmet la clé de chiffrement CW sous une forme chiffrée en association à des critères d'accès dans un message 407 de type ECM. L'entité de diffusion 402 transmet également un autre message de contrôle d'accès 410 de type ECM dans lequel la clé de chiffrement sous une forme chiffrée a été retirée, seule une référence à cette clé de chiffrement y est indiquée et, dans cet exemple, aucun critère d'accès n'est présent. Ce message de contrôle d'accès est donc un message de contrôle d'accès à compléter selon un mode de réalisation de la présente invention.

Dans un mode de réalisation le premier contenu numérique 412 indique la clé de chiffrement CW, utilisée pour chiffrer le second contenu numérique 400. Cette clé de chiffrement CW sous forme chiffrée peut être insérée dans le contenu numérique sous forme d'image afin de pouvoir restituer en image sa valeur à un utilisateur du récepteur. Ce premier contenu numérique 412 est transmis avant le second contenu numérique 400.

L'entité de diffusion 401 transmet donc un flux de données 413 comprenant le premier contenu numérique 412 avec l'image de la clé de chiffrement chiffrée.

Un multiplexeur 403 est en charge de recevoir ces différents flux de données et de les diffuser sous une forme multiplexée dans le réseau vers les récepteurs. Ce multiplexeur 403 reçoit donc en entrée :
- un flux de données 413 comprenant le contenu numérique 412 et l'image de la valeur de la clé de chiffrement sous forme chiffrée utilisée pour le chiffrement du second contenu 400 ;
- un flux de données 411 comprenant le contenu numérique 400 sous une forme chiffrée à l'aide de la clé de chiffrement ;
- un message de contrôle d'accès 407 associé au flux 411 et contenant des critères d'accès 406 associés au contenu numérique 400 et la clé de chiffrement CW sous une forme chiffrée.
- un message de contrôle d'accès 410 incomplet associé au flux 411 et qui ne contient ni la clé de chiffrement sous forme chiffrée, ni critères d'accès ;

Le flux de données 413 peut être diffusé en clair sans être chiffré. Lors de la restitution de ce flux de données 413 par le récepteur, l'utilisateur peut alors visualiser la valeur de la clé de chiffrement CW sous forme chiffrée, notée ici 456 et utilisable dans le message de type ECM 410 associé au second flux 411.

On peut prévoir que le contenu numérique 400 diffusé sous forme chiffrée correspond à un film et que le contenu numérique 412 diffusé en clair correspond à une séquence de publicités.

Les récepteurs 13-1 à 13-3 reçoivent toutes ces informations sous forme multiplexée.

Le récepteur 13-1 dispose de droits d'accès qui remplissent les critères d'accès présents dans le message de contrôle d'accès ECM 407 et associé au contenu numérique 400 diffusé sous forme chiffrée. Par conséquent, il peut traiter correctement le message de contrôle d'accès 407. Or, ce message de contrôle d'accès 407 indique la clé de chiffrement sous une forme chiffrée. La clé de chiffrement CW chiffrée est alors déchiffrée et le contenu numérique 400 peut alors être accédé et restitué au niveau du récepteur 13-1.

Le récepteur 13-2, tout comme le récepteur 13-3, ne dispose pas de droits d'accès au second contenu 400. Ainsi, ni l'un ni l'autre ne peut traiter correctement le message de contrôle d'accès ECM 407. Ils récupèrent alors le message de contrôle d'accès 410 dont l'accès n'est pas soumis au contrôle de droits d'accès au regard de critères d'accès requis, puisqu'il ne contient pas de critères d'accès restrictifs. Toutefois, ce message ne contient pas la clé de chiffrement sous forme chiffrée dans son intégralité.

Ainsi, sur réception de ce message de contrôle d'accès 410, le récepteur 13-3 reçoit de l'utilisateur correspondant la clé de chiffrement sous une forme chiffrée 456 et complète le message de contrôle d'accès 410 de sorte à récupérer la clé de chiffrement en clair.

Dans l'exemple d'application illustré ici, la clé de chiffrement sous forme chiffrée est récupérée à partir du message de contrôle d'accès 413. Par conséquent, dans ce cas, si l'utilisateur d'un des récepteurs 13-2 ou 13-3 est attentif au cours de la diffusion préalable des publicités, il mémorise la clé de chiffrement chiffrée qui lui est livrée lors des publicités. Il peut ensuite compléter le message de contrôle d'accès 410 avec cette clé de chiffrement chiffrée et recevoir en retour la clé de chiffrement en clair pour accéder au contenu numérique 400. L'utilisateur du récepteur 13-2 n'ayant pas mémorisé la clé de chiffrement chiffrée 450 ne peut obtenir la clé de chiffrement déchiffrée pour accéder au contenu numérique 400.

Ainsi, dans ce système, soit le récepteur dispose de droits d'accès qui lui permettent d'utiliser un message de type ECM classique pour obtenir la clé de chiffrement permettant d'accéder au contenu numérique. Soit le récepteur ne dispose pas de ces droits d'accès, dans ce cas un autre message de contrôle d'accès 'incomplet' en quelque sorte peut être utilisé en le complétant avec une information obtenue par ailleurs. Le contrôle d'accès se fait alors via un contrôle d'action, comme ici par exemple la visualisation d'une publicité.

Ce type de système peut avantageusement être utilisé pour mettre en oeuvre une application relative à des jeux de télévision. On peut en effet prévoir un jeu reposant sur une succession de questions. Chaque question requiert une réponse qui correspond à une clé de chiffrement ou une partie de clé de chiffrement permettant d'accéder à la prochaine question. Ainsi, chaque question est transmise de manière chiffrée avec une clé de chiffrement qui correspond, sous sa forme chiffrée, à la réponse de la question précédente.

Seuls quelques exemples sont décrits explicitement ci-avant. Toutefois, une grande flexibilité d'offres et de combinaisons d'offres est permise grâce aux caractéristiques de la présente invention.

La figure 5 illustre un récepteur et une entité de transmission selon un mode de réalisation de la présente invention.

Le récepteur 12 comprend :
- une unité de réception 51 adaptée pour recevoir un message de contrôle d'accès ;
- une unité de saisie 52 adaptée pour recevoir une information complémentaire d'un utilisateur;
- une première unité d'obtention 53 adaptée pour obtenir un message de contrôle d'accès complété en ajoutant une information complémentaire audit message de contrôle d'accès ;
- une seconde unité d'obtention 54 adaptée pour obtenir une clé de déchiffrement du contenu numérique sur la base du message de contrôle d'accès complété ; et
- une unité de déchiffrement 55 adaptée pour déchiffrer le contenu numérique transmis à l'aide de la clé de déchiffrement.

L'unité de saisie 52 peut correspondre à un clavier, comme le clavier d'un télécommande par exemple, sur lequel l'utilisateur peut saisir l'information complémentaire selon un mode de réalisation.

Une entité de transmission 402 selon un mode de réalisation de la présente invention comprend :
- une unité de construction 56 adaptée pour composer un message de contrôle d'accès, ledit message de contrôle d'accès comprenant des informations adaptées pour un traitement au niveau du récepteur ;
- une unité d'obtention 57 adaptée pour obtenir un message de contrôle d'accès à compléter en retirant une information dudit message de contrôle d'accès ; et
- une unité de transmission 58 adaptée pour transmettre audit récepteur le message de contrôle d'accès à compléter, ledit message transmis étant à compléter par une information complémentaire fournie par un utilisateur.

## Revendications

1. Procédé de gestion d'accès d'un récepteur (13) à un contenu numérique (400) transmis dans un réseau de communication (12) sous une forme chiffrée (CW) ;
ledit procédé de gestion d'accès comprenant les étapes suivantes au niveau du récepteur :
/a/ recevoir (21) un message de contrôle d'accès à compléter (410) ;
/b/ obtenir (22) un message de contrôle d'accès complété en ajoutant une information complémentaire audit message de contrôle d'accès à compléter (410) ;
/c/ obtenir (23) une clé de déchiffrement du contenu numérique sur la base du message de contrôle d'accès complété ; et
/d/ déchiffrer (24) le contenu numérique transmis à l'aide de la clé de déchiffrement obtenue ;
dans lequel ladite information complémentaire est fournie par un utilisateur.

2. Procédé de gestion d'accès selon la revendication 1, dans lequel le message de contrôle d'accès complété indique la clé de déchiffrement (CW) sous forme chiffrée et dans lequel l'information complémentaire correspond à au moins une partie de la clé de déchiffrement sous forme chiffrée.

3. Procédé de gestion d'accès selon la revendication 1, dans lequel le message à compléter indique la clé de déchiffrement sous forme chiffrée et au moins un critère d'accès et dans lequel l'information complémentaire correspond à l'un au moins parmi une partie de la clé de déchiffrement sous forme chiffrée et une partie dudit critère d'accès.

4. Procédé de gestion d'accès selon la revendication 1, dans lequel le message de contrôle d'accès complété est un message préalable qui permet de traiter un message ultérieur indiquant la clé de déchiffrement.

5. Procédé de gestion d'accès selon la revendication 1, dans lequel le message de contrôle d'accès à compléter (410) est un message individuel, un message de groupe ou un message général.

6. Procédé de gestion d'accès selon la revendication 1, dans lequel le message de contrôle d'accès à compléter (410) indique une pluralité d'informations complémentaires et dans lequel un utilisateur fournit l'information complémentaire en en sélectionnant une parmi ladite pluralité.

7. Procédé de gestion d'accès selon la revendication 1, dans lequel l'information complémentaire est reçue dans un autre contenu numérique (413).

8. Procédé de gestion d'accès selon la revendication 1, comprenant en outre les étapes suivantes au niveau du récepteur :
/1/ recevoir et restituer une question; et
/2/ recevoir d'un utilisateur une réponse à ladite question;
dans lequel ladite réponse correspond à l'information complémentaire.

9. Procédé de gestion d'accès d'un récepteur (13) à un contenu numérique (400) transmis dans un réseau de communication sous une forme chiffrée ;
ledit procédé de gestion d'accès comprenant les étapes suivantes au niveau d'une entité de transmission :
/a/ composer un message de contrôle d'accès, ledit message de contrôle d'accès comprenant des informations adaptées pour un traitement au niveau du récepteur ;
/b/ obtenir un message de contrôle d'accès à compléter en retirant au moins une desdites informations dudit message de contrôle d'accès ; et
/c/ transmettre audit récepteur le message de contrôle d'accès à compléter (410), ledit message transmis étant à compléter par une information complémentaire fournie par un utilisateur pour obtenir une clé de déchiffrement du contenu numérique.

10. Récepteur adapté pour recevoir un contenu numérique transmis dans un réseau de communication sous une forme chiffrée ;
ledit récepteur comprenant :
- une unité de réception (51) adaptée pour recevoir un message de contrôle d'accès à compléter (410) ;
- une unité de saisie (52) adaptée pour recevoir une information complémentaire d'un utilisateur;
- une première unité d'obtention (53) adaptée pour obtenir un message de contrôle d'accès complété en ajoutant une information complémentaire audit message de contrôle d'accès à compléter (410) ;
- une seconde unité d'obtention (54) adaptée pour obtenir une clé de déchiffrement du contenu numérique sur la base du message de contrôle d'accès complété ; et
- une unité de déchiffrement (55) adaptée pour déchiffrer le contenu numérique transmis à l'aide de la clé de déchiffrement.

11. Entité de transmission (402) adaptée pour gérer un accès d'un récepteur à un contenu numérique transmis dans un réseau de communication sous une forme chiffrée ;
ladite entité de transmission comprenant :
- une unité de construction (56) adaptée pour composer un message de contrôle d'accès associé au contenu numérique transmis, ledit message de contrôle d'accès comprenant des informations adaptées pour un traitement au niveau du récepteur ;
- une unité d'obtention (57) adaptée pour obtenir un message de contrôle d'accès à compléter en retirant une information dudit message de contrôle d'accès ; et
- une unité de transmission (58) adaptée pour transmettre audit récepteur le message de contrôle d'accès à compléter, ledit message transmis étant à compléter par une information complémentaire fournie par un utilisateur pour obtenir une clé de déchiffrement du contenu numérique.

12. Système de contrôle d'accès à un contenu numérique, comprenant une entité de transmission (402) selon la revendication 11, et au moins un récepteur (13) selon la revendication 10.

13. Programme d'ordinateur comportant des instructions pour la mise en oeuvre du procédé selon la revendication 1, lorsque ce programme est exécuté par un processeur.

14. Programme d'ordinateur comportant des instructions pour la mise en oeuvre du procédé selon la revendication 9, lorsque ce programme est exécuté par un processeur.

## Patentansprüche

1. Verfahren zur Verwaltung des Zugriffs eines Empfängers (13) auf einen digitalen Inhalt (400), der in einem Kommunikationsnetzwerk (12) in verschlüsselter Form (CW) übertragen wird;
wobei das Zugriffsverwaltungsverfahren auf der Ebene des Empfängers die folgenden Schritte enthält:
/a/Empfang (21) einer zu vervollständigenden
Zugriffskontrollmitteilung (410);
/b/Erhalt (22) einer durch Hinzufügen einer
komplementären Information zur zu vervollständigenden Zugriffskontrollmitteilung (410) vervollständigten Zugriffskontrollmitteilung;
/c/Erhalt (23) eines Entschlüsselungsschlüssels
des digitalen Inhalts auf der Basis der vervollständigten Zugriffskontrollmitteilung; und
/d/Entschlüsselung (24) des übertragenen digitalen
Inhalts mit Hilfe des erhaltenen Entschlüsselungsschlüssels;
wobei die komplementäre Information von einem Benutzer geliefert wird.

2. Zugriffsverwaltungsverfahren nach Anspruch 1, wobei die vervollständigte Zugriffskontrollmitteilung den Entschlüsselungsschlüssel (CW) in verschlüsselter Form anzeigt, und wobei die komplementäre Information mindestens einem Teil des Entschlüsselungsschlüssels in verschlüsselter Form entspricht.

3. Zugriffsverwaltungsverfahren nach Anspruch 1, wobei die zu vervollständigende Mitteilung den Entschlüsselungsschlüssel in verschlüsselter Form und mindestens ein Zugriffskriterium anzeigt, und wobei die komplementäre Information mindestens einem von einem Teil des Entschlüsselungsschlüssels in verschlüsselter Form und von einem Teil des Zugriffskriteriums entspricht.

4. Zugriffsverwaltungsverfahren nach Anspruch 1, wobei die vervollständigte Zugriffskontrollmitteilung eine vorhergehende Mitteilung ist, die es ermöglicht, eine spätere Mitteilung zu verarbeiten, die den Entschlüsselungsschlüssel anzeigt.

5. Zugriffsverwaltungsverfahren nach Anspruch 1, wobei die zu vervollständigende Zugriffskontrollmitteilung (410) eine einzelne Mitteilung, eine Gruppenmitteilung oder eine allgemeine Mitteilung ist.

6. Zugriffsverwaltungsverfahren nach Anspruch 1, wobei die zu vervollständigende Zugriffskontrollmitteilung (410) eine Vielzahl von komplementären Informationen anzeigt, und wobei ein Benutzer die komplementäre Information liefert, indem er eine aus der Vielzahl auswählt.

7. Zugriffsverwaltungsverfahren nach Anspruch 1, wobei die komplementäre Information in einem anderen digitalen Inhalt (413) empfangen wird.

8. Zugriffsverwaltungsverfahren nach Anspruch 1, das außerdem die folgenden Schritte auf der Ebene des Empfängers enthält:
/1/Empfang und Wiedergabe einer Frage; und
/2/Empfang einer Antwort auf die Frage von einem
Benutzer;
wobei die Antwort der komplementären Information entspricht.

9. Verfahren zur Verwaltung des Zugriffs eines Empfängers (13) auf einen in einem Kommunikationsnetzwerk in verschlüsselter Form übertragenen digitalen Inhalt (400);
wobei das Zugriffsverwaltungsverfahren auf der Ebene einer Übertragungsentität die folgenden Schritte enthält:
/a/Verfassen einer Zugriffskontrollmitteilung,
wobei die Zugriffskontrollmitteilung Informationen enthält, die für eine Verarbeitung auf der Ebene des Empfängers geeignet sind;
/b/Erhalt einer zu vervollständigenden
Zugriffskontrollmitteilung, indem mindestens eine der Informationen aus der Zugriffskontrollmitteilung entnommen wird; und /c/Übertragung der zu vervollständigenden
Zugriffskontrollmitteilung (410) an den Empfänger, wobei die übertragene Mitteilung durch eine von einem Benutzer gelieferte komplementäre Information zu vervollständigen ist, um einen Entschlüsselungsschlüssel des digitalen Inhalts zu erhalten.

10. Empfänger, der geeignet ist, um einen in einem Kommunikationsnetzwerk in verschlüsselter Form übertragenen digitalen Inhalt zu empfangen;
wobei der Empfänger enthält:
- eine Empfangseinheit (51), die geeignet ist, um eine zu vervollständigende Zugriffskontrollmitteilung (410) zu empfangen;
- eine Eingabeeinheit (52), die geeignet ist, um eine komplementäre Information von einem Benutzer zu empfangen;
- eine erste Erhalteinheit (53), die geeignet ist, um eine vervollständigte Zugriffskontrollmitteilung zu erhalten, indem der zu vervollständigenden Zugriffskontrollmitteilung (410) eine komplementäre Information hinzugefügt wird;
- eine zweite Erhalteinheit (54), die geeignet ist, um einen Entschlüsselungsschlüssel des digitalen Inhalts auf der Basis der vervollständigten Zugriffskontrollmitteilung zu erhalten; und
- eine Entschlüsselungseinheit (55), die geeignet ist, um den übertragenen digitalen Inhalt mit Hilfe des Entschlüsselungsschlüssels zu entschlüsseln.

11. Übertragungsentität (402), die geeignet ist, um einen Zugriff eines Empfängers auf einen digitalen Inhalt zu verwalten, der in einem Kommunikationsnetzwerk in verschlüsselter Form übertragen wird;
wobei die Übertragungsentität enthält:
- eine Aufbaueinheit (56), die geeignet ist, um eine dem übertragenen digitalen Inhalt zugeordnete Zugriffskontrollmitteilung zu verfassen, wobei die Zugriffskontrollmitteilung Informationen enthält, die für eine Verarbeitung auf der Ebene des Empfängers geeignet sind;
- eine Erhalteinheit (57), die geeignet ist, um eine zu vervollständigende Zugriffskontrollmitteilung zu erhalten, indem eine Information aus der Zugriffskontrollmitteilung entnommen wird; und
- eine Übertragungseinheit (58), die geeignet ist, um die zu vervollständigende Zugriffskontrollmitteilung an den Empfänger zu übertragen, wobei die übertragene Mitteilung durch eine von einem Benutzer gelieferte komplementäre Information zu vervollständigen ist, um einen Entschlüsselungsschlüssel des digitalen Inhalts zu erhalten.

12. System zur Kontrolle des Zugriffs auf einen digitalen Inhalt, das eine Übertragungsentität (402) nach Anspruch 11 und mindestens einen Empfänger (13) nach Anspruch 10 enthält.

13. Computerprogramm, das Anweisungen zur Durchführung des Verfahrens nach Anspruch 1 aufweist, wenn dieses Programm von einem Prozessor ausgeführt wird.

14. Computerprogramm, das Anweisungen zur Durchführung des Verfahrens nach Anspruch 9 aufweist, wenn dieses Programm von einem Prozessor ausgeführt wird.

## Claims

1. Method for managing access of a receiver (13) to digital content (400) transmitted over a communications network (12) in an encrypted form (CW) ;
said access management method comprising the following steps in the receiver .
/a/ receiving (21) an access control message to complete (410);
/b/ obtaining (22) a completed access control message by adding an additional item of information to said access control message to complete (410);
/c/ obtaining (23) a key for the decryption of the digital content on the basis of the completed access control message; and
/d/ decrypting (24) the digital content transmitted
using the decryption key obtained;
in which said additional item of information is provided by a user.

2. Access management method according to Claim 1, in which the completed access control message indicates the decryption key (CW) in encrypted form and in which the additional item of information corresponds to at least part of the decryption key in encrypted form.

3. Access management method according to Claim 1, in which the message to complete indicates the decryption key in encrypted form and at least one access criterion and in which the additional item of information corresponds to at least one among part of the decryption key in encrypted form and part of said access criteria.

4. Access management method according to Claim 1, in which the completed access control message is a prior message which makes it possible to process a subsequent message indicating the decryption key.

5. Access management method according to Claim 1, in which the access control message to complete (410) is an individual message, a group message or a general message.

6. Access management method according to Claim 1, in which the access control message to complete (410) indicates a plurality of additional items of information and in which a user supplies the additional item of information by selecting one item among said plurality.

7. Access management method according to Claim 1, in which the additional item of information is received in another digital content (413).

8. Access management method according to Claim 1, also comprising the following steps in the receiver:
/1/ receiving and returning a question; and
/2/ receiving from a user a reply to said question;
in which said reply corresponds to the additional item of information.

9. Method for managing access of a receiver (13) to digital content (400) transmitted over a communications network in encrypted form;
said access management method comprising the following steps in a transmission entity:
/a/ composing an access control message, said access control message comprising items of information suitable for processing in the receiver;
/b/ obtaining an access control message to complete by extracting at least one of said items of information from said access control message; and
/c/ transmitting to said receiver the access control message to complete (410), said transmitted message being for completion by an additional item of information provided by a user to obtain a key for decryption of the digital content.

10. Receiver suitable for receiving a digital content transmitted over a communications network in an encrypted form;
said receiver comprising:
- a receiving unit (51) suitable for receiving an access control message to complete (410);
- a capture unit (52) suitable for receiving an additional item of information from a user;
- a first obtaining unit (53) suitable for obtaining a completed access control message by adding an additional item of information to said access control message to complete (410);
- a second obtaining unit (54) suitable for obtaining a key for decryption of the digital content on the base of the completed access control message; and
- a decryption unit (55) suitable for decrypting the digital content transmitted using the decryption key.

11. Transmission entity (402) suitable for managing access of a receiver to digital content transmitted over a communications network in an encrypted form; said transmission entity comprising:
- a construction unit (56) suitable for composing an access control message associated with the digital content transmitted, said access control message comprising items of information suitable for processing in the receiver;
- an obtaining unit (57) suitable for obtaining an access control message to complete by extracting an item of information from said access control message; and
- a transmission unit (58) suitable for transmitting to said receiver the access control message to complete, said message transmitted being for completion by an additional item of information provided by a user to obtain a key for the decryption of the digital content.

12. System for controlling access to a digital content, comprising a transmission entity (402) according to Claim 11, and at least one receiver (13) according to Claim 10.

13. Computer program containing instructions for the implementation of the method according to Claim 1, when this program is executed by a processor.

14. Computer program containing instructions for the implementation of the method according to Claim 9, when this program is executed by a processor.
